(19) Europäisches Patentamt
European Patent Office
Office européen des brevets

(11) EP 2 715 987 B1

## (12) EUROPEAN PATENT SPECIFICATION

(45) Date of publication and mention of the grant of the patent:
**23.08.2017 Bulletin 2017/34**

(21) Application number: **11866932.4**

(22) Date of filing: **31.05.2011**

(51) Int Cl.:
*H04L 12/54* (2013.01)    *H04L 29/06* (2006.01)
*H04L 29/08* (2006.01)

(86) International application number:
**PCT/CN2011/074987**

(87) International publication number:
**WO 2012/162882 (06.12.2012 Gazette 2012/49)**

## (54) METHOD AND APPARATUS FOR STREAMING MULTIMEDIA CONTENTS

VERFAHREN UND VORRICHTUNG FÜR DAS STREAMING VON VON MULTIMEDIAINHALTEN

PROCÉDÉ ET APPAREIL POUR TRANSMETTRE EN CONTINU DES CONTENUS MULTIMÉDIAS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.04.2014 Bulletin 2014/15**

(73) Proprietor: **Thomson Licensing**
**92130 Issy-les-Moulineaux (FR)**

(72) Inventors:
• **XU, Yan**
  **Beijing 100192 (CN)**
• **MA, Xiaojun**
  **Beijing 100192 (CN)**
• **LI, Jun**
  **Beijing 100192 (CN)**

(74) Representative: **Desvignes, Agnès et al**
**Marks & Clerk France**
**Immeuble Visium**
**22, avenue Aristide Briand**
**94117 Arcueil Cedex (FR)**

(56) References cited:
WO-A1-00/35201         WO-A1-2009/103343
CN-A- 1 588 909        CN-A- 101 060 621
US-A1- 2008 037 527

• **SANJEEV MEHROTRA ET AL: "Rate-distortion optimized client side rate control for adaptive media streaming", MULTIMEDIA SIGNAL PROCESSING, 2009. MMSP '09. IEEE INTERNATIONAL WORKSHOP ON, IEEE, PISCATAWAY, NJ, USA, 5 October 2009 (2009-10-05), pages 1-6, XP031550761, ISBN: 978-1-4244-4463-2**

**Description**

Field of the invention

This invention relates to a method and apparatus for streaming multimedia contents such as audio, video, text etc. over a multimedia communication network.

Background

The use of Internet to carry multimedia contents, such as high-quality video is continuously growing. Integration of quality adaptive encoding schemes, forward error correction techniques and congestion control algorithms is crucial to provide an effective video delivering system. Congestion control is an effective method for multimedia applications to discover the available bandwidth in the multimedia communication network, such as web TV, to avoid transmission congestion and to balance load. Therefore, it is widely applied in an internet environment including multimedia content streaming from a source to users.

The internet environment usually uses a Transmission Control Protocol (TCP) end to end congestion control which is appropriate for applications such as bulk data transfer. However, it's not suitable for most of video streaming applications which do not allow the abrupt changes in transmission rate in a very short time scale, as it may affect the user perceived quality. Then, TCP-Friendly Rate Control (TFRC) is designed for User Datagram protocol (UDP) traffic transmission with relative fairness because it has a much lower variation of throughput over time compared to the TCP congestion control, and so makes it more suitable for applications such as streaming of multimedia contents.

In the current Peer to peer (P2P) video applications, the TCP or TFRC congestion control is widely employed and focus on downloading applications, instead of streaming applications. Downloading applications aims at maximizing the aggregate utility over all peers. It does not need to guarantee data being arrived timely, which is an important issue for streaming applications, where the user is playing back the multimedia content during its receiving from the source at the speed of necessarily rendering it properly.

Therefore, it is highly desirable to come up with a solution that can handle the congestion problem for supporting streaming applications for multimedia contents.

Article of Sanjeev Mehrotra et al, "Rate-distorsion Optimized Client Side Rate Control for Adaptive Media Streaming", MMSP'09, October 5-7, 2009, Brazil, IEEE 2009, XP031550761, ISBN:978-1-4244-4463-2, proposes an algorithm to optimize the client side rate for different portions of a media stream in account of a desired startup latency, desired client buffer size, current client buffer size and estimated network bandwidth.

US 2008/0037527 describes a scalable Media-on Demand method making use of peer buffering capabilities, with a search for optimal peers as parent nodes for a receiver pe to connect to.

Summary of the Invention

The invention concerns a method for streaming a multimedia content from a set of at least one sender peer to a receiver peer as defined in claim 1.

The invention also concerns a receiver peer in a multimedia communication system using the above method for streaming multimedia content.

According to an embodiment of the invention, the data transmission rate from sender peers to a receiver peer is adjusted according to the combination of a calculated transmission rate and the receiver peer's buffer inspection. The receiver peer measures the roundtrip time and loss event rate to calculate the transmission rates according to a TFRC equation. A target rate is calculated according to the buffer level at the receiver peer. The final data transmission rate is determined selectively as the transmission rate or as the target rate based on a predetermined condition. This solution can guarantee data being arrived timely and keep continuous video playing back on the receiver side.

Brief description of the drawings

These and other aspects, features and advantages of the present invention will become apparent from the following description of an embodiment in connection with the accompanying drawings:

Fig.1 is a diagram of an exemplary multimedia communication system in which an embodiment of the invention is used;
Fig.2 is a block diagram showing the architecture of a receiver peer and a sender peer in the multimedia communication system according to the embodiment of the invention;
Fig.3 is a diagram showing message and data transmission procedure according to the embodiment of the invention;

Fig.4 is a diagram showing the buffer occupancy level of the receiver according to the embodiment of the invention; and

Fig.5 is a flow chart showing a method for streaming multimedia content according to the embodiment of the invention.

Detailed description of the invention

In the embodiment, terms sender peer and receiver peer are used in the context of P2P networks. Sender peer means an apparatus or a peer which offers a service. It may also be a server. Receiver peer means an apparatus or a peer which requests a service. It is known that a peer in the P2P network can be a sender peer and a receiver peer at the same time.

Each receiver peer maintains connection with a set of sender peers. Such sender peers include active sender peers and standby sender peers. An active sender peer is defined as a sender peer that provides the multimedia content to the receiver peer which requested it. A standby sender peer is defined as a sender peer that does not provide the requested multimedia content to the receiver peer, but may be interesting for the receiver peer and connects with the receiver peer. A receiver peer may set up connections with standby peers so as to get some information from them, such as available uploading degree of the standby peers, available uploading rate of the standby peers, and available video segments in their buffers. The receiver peer may have a maximum downloading degree which defines the maximum number of active sender peers concurrently connected to it.

In order to explain the embodiment, some equations are used, and the symbols in the equations have the definition listed in the following form.

| Symbol | Definition |
| --- | --- |
| r | playback rate of the video streaming r |
| Dij_desired | the desired downloading rate from i to j |
| Dj_target | the target of the total downloading rate of peer j |
| L_target | the target buffer level |
| L(t) | current buffer level (at time t) |
| LT | lower level threshold |
| HT | higher level threshold |

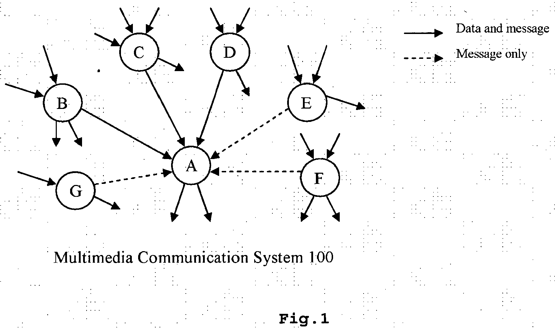

Fig.1 is a diagram of an exemplary multimedia communication system 100 in which an embodiment of the invention is used. In Fig.1, a receiver peer A is streaming video data from multiple sender peers B-G in the multimedia communication system 100. The maximum downloading degree can be selected by one skilled in the art to facilitate the internet management. Here the maximum downloading degree of the receiver peer A is 3. Peers B, C and D are active sender peers which are providing the video data to the receiver peer A, and peers E, F and G are standby sender peers which are not providing video data to the receiver peer A at the moment.

Congestion control according to the embodiment is used to deal with the case of the receiver peer A streaming video data from multiple sender peers in the multimedia communication system 100, which objective is to keep the receiver peer A getting a continuous video playback by keeping the aggregate downloading rate from the active sender peers B, C and D close to the video playback rate.

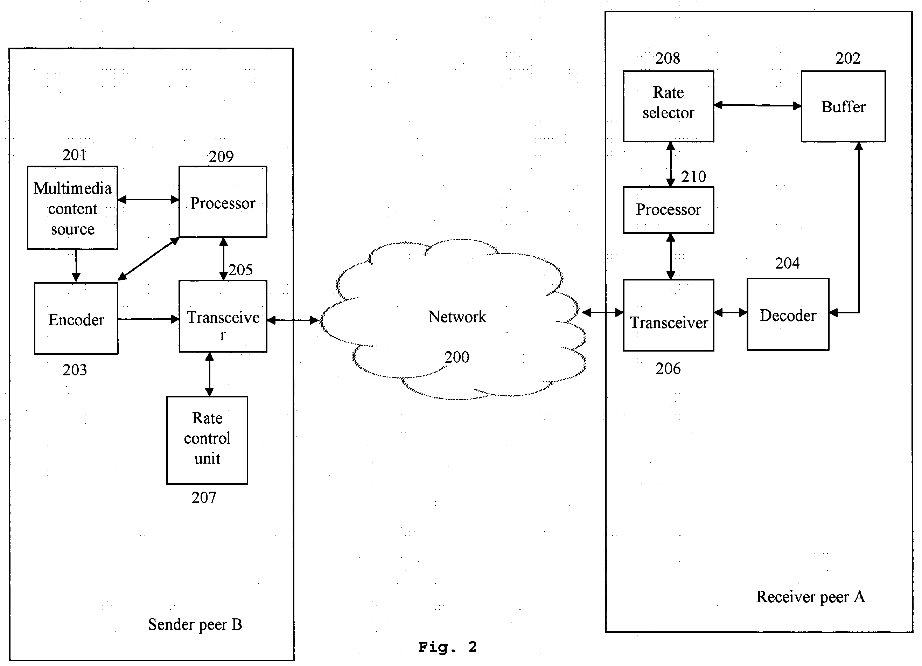

Fig.2 is a block diagram showing the architecture of the receiver peer A and the sender peer B in the multimedia communication system 100. Only those portions relevant to explanation of the embodiment of the invention are shown. The receiver peer A can receive audio/video multimedia content from all sender peers (including the sender peer B) in the multimedia communication system 100 through a network 200. The network 200 can be the Internet, an intranet, an extranet, a satellite network or any other wireless or wired network.

The sender peer B comprises a multimedia content source 201, an encoder 203, a transceiver 205, a rate control unit 207 and a processor 209. The sender peer B is a processor-based system and can include one or more processors and associated memory. In this context, computer programs, or software, are stored in the memory (not shown) for execution by the processor 209, e.g., to implement the multimedia content delivery. The processor is representative of one or more stored-program control processors and the processor may also control other functions of the peer B. The source 201 is representative of any storage device to store any multimedia contents, may be internal and/or external to the peer B, and is volatile and/or non-volatile as necessary.

In the peer B, the encoder 203 is adapted to encode the multimedia content from the source 201, when necessary, to form an encoded data content, for example by using Reed Solomon (RS) encoding methods, and the transceiver 205 sends the encoded multimedia content through the network 200 to the receiver peer A which made the request.

The receiver peer A comprises a buffer 202, a decoder 204, a transceiver 206, a rate selector 208 and a processor 210. Like the sender peer B, the receiver peer A is also a processor-based system and includes one or more processors and associated memory (not shown). In the receiver peer A, the transceiver 206 and decoder 204 are adapted to receive the encoded multimedia content from the network 200 and decode it. Then the multimedia content is stored in the buffer 202 to playback by the receiver peer A. According to the embodiment, the rate selector 208 is adapted to select the downloading rate based on the buffer occupancy level and the content transmission situation under the control of the processor 210.

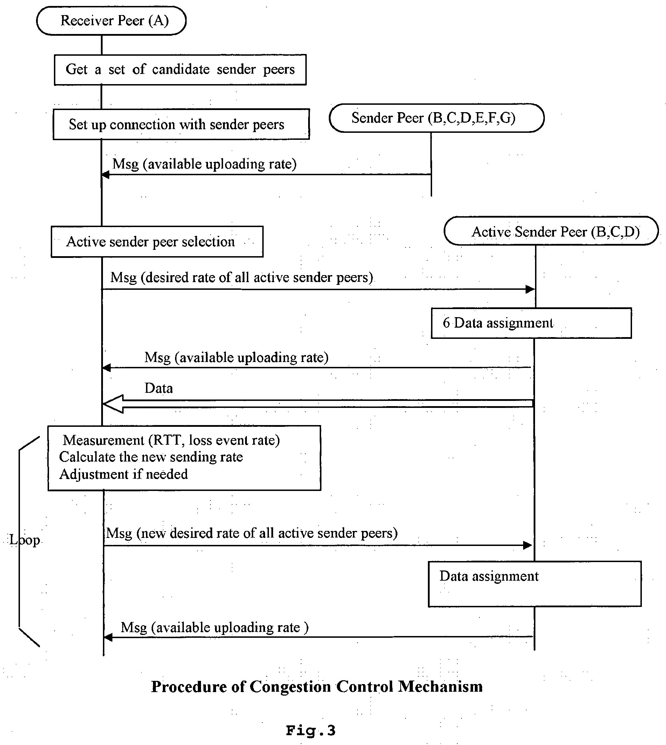

Fig.3 is a diagram showing message and data transmission procedure in the multimedia communication system 100. According to the embodiment, when a user of the receiver peer A inputs a request for a video content, the peer A could search a list in its memory (not shown), which for example can be a name list of video contents on other peers. Alternatively, the list can be resided on a server in the network 200, which list all available multimedia services in the peers and any peers can search the list to find the interested video for streaming. Then a set of candidate peers who have the requested video content is obtained from the information in the list. The candidate peers can be selected according to the distance from the receiver peer, the remained bandwidth and the available uploading rate of the sender peers etc. so as to yield desired downloading rate and quality for the content transmission. Then the receiver peer A sets up a connection with them through the network 200. Similarly, some of the candidate peers are selected as active sender peers if they have higher available uploading rate than others or they are closer to the receiver peer, for example the sender peers B, C and D. Others are selected as standby sender peers, for example sender peers E, F and G from which replacement peers will substitute failed or degraded peers from the active senders. All the sender peers (active and standby) announce periodically their available uploading rate to the receiver peer A as shown in Fig.3.

In order to download the interested video content from the sender peers, the receiver peer A makes a request to get data from active sender peers, and sends following

information in a message through the network 200 to each of its active sender peers:

1) Desired downloading rates from each active sender B, C and D, (Dij_desired); The aggregate downloading rate from the active senders equals to the playback rate of the video content in the receiver peer A, or is increased or decreased according to the buffer occupancy level. For example the DBA_desired and DCA_desired can be the maximum available uploading rate of sender peers B and C respectively and the DDA_desired is the remained rate of the aggregate rate.

2) Index of each desired downloading rate belongs to the specific sender peer; For example, the index sends to sender peer B is 1, C is 2, D is 3. It means the first rate in the message is for sender peer B, the second is for sender peer C and the third is for sender peer D, which can be used by each sender peer to find its rate.

3) Index of the requested content. The whole video content can be divided into parts or segments, which can be requested from a sender peer or different sender peers. The index is used by each active sender peer to select the parts or segments to be sent to the receiver peer.

Then each active sender peer for the receiver peer A assigns the data segments according to the desired downloading rate and the requested content, and sends data to the receiver peer A.

In order to reach the objective of congestion control to keep the receiver peer A getting a continuous video playback by keeping the aggregate downloading rate from the sender peers B, C and D close to the video playback rate, or keeping the buffer 202 at a reasonable occupancy level, the rate selector 208 of the receiver peer A will make a rate selection according to the buffer occupancy level of the buffer 202 and the video content transmission situation. The rate selector 208 measures the video streaming situation between the receiver peer A and each sender peer, to get loss event rate p, average round trip time RTT and retransmit timeout value $t_{RTO}$. The loss event rate is between 0 and 1 to indicate the ratio of loss event number and packet transmitted number. The round trip time can be obtained by a sender peer according to the sending time of data packet and the transmission time of acknowledgement message from the receiver peer A, and the receiver peer gets the round trip time from each sender peer periodically. The retransmit timeout value $t_{RTO}$ is the time period to retransmit the data packet, for example equal to 4*RTT.

For each connection from active sender peers to the receiver peer related with the same video streaming, the rate selector of the receiver peer can obtain an optimized transmission rate from the sender peers respectively according to the following TFRC equation:

$$Dij\_calculated = \frac{s}{RTT * \sqrt{\frac{2p}{3}} + t_{RTO} * 3 * \sqrt{\frac{3p}{8}} * p * (1 + 32p^2)}$$

(1)

Where

s: the packet size in bits
RTT: the roundtrip time in seconds
p: the loss event rate
$t_{RTO}$: the TCP retransmission timeout values in seconds. Empirically $t_{RTO}$ = 4*RTT.

According to the equation, the receiver peer j determines Dij_desired periodically, which can optimize the network situation and avoid congestion in the network.

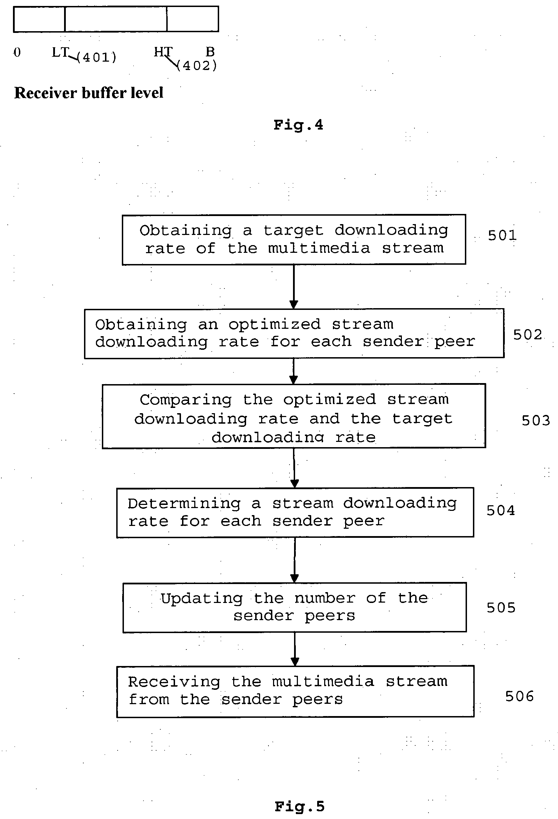

Then, the buffer occupancy level of the buffer 202 in the receiver peer A is considered to get a new transmission rate. Fig.4 is a diagram showing the buffer occupancy level of the buffer 202. In order to keep the video playing out continuously, the buffer should not be under-flow or overflow. LT and HT denote lower level threshold and higher level threshold respectively, and the buffer size is V.

The buffer occupancy level is checked periodically, here period is T, which can be selected by one skilled in the art. Typically, choose multiple times duration time of one video frame as T. For example, let T be 80ms when the current video frame rate is 25fps. L_target and L(t) are the target buffer level and the current buffer level (at time t) respectively. For example L_target equals to V/2. In order to filter out short-term fluctuations, a smoothing function can be applied to L(t). Let L_smoothed(t) be the smoothed current buffer level (t denotes current time).

$$L\_smoothed(t) = a*L(t) + (1-a)*L\_smoothed(t-T) \qquad (2)$$

wherein a is coefficient between 0 and 1 used to adjust the smoothing effect, and can be selected by one skilled in the art. A small value of a will have less smoothing effect and be more responsive to recent buffer level changes, while a larger a will have a greater smoothing effect, and be less responsive to recent buffer level changes.

In addition, the parameters of the buffer level thresholds LT and HT have important effect on the performance of the system. Here the selection of LT and HT is based on the tolerable peer switching time, which is the time that the receiver peer switches to receive the multimedia content from a group of sender peers to another group. If the tolerable peer switching time is w, then we may have LT=r*w wherein r is the playback rate of the video content. HT may have a symmetrical level to LT as shown in Fig.4.

In general, the target aggregate downloading rate from all sender peers $D_{j}$_target shall be the playback rate of the video content r. However, according to the smoothed current buffer occupancy level L_smoothed(t) and the buffer level thresholds LT and HT, the target aggregate downloading rate can be adjusted by increasing or decreasing a related value to the buffer occupancy level accordingly.

For example:

Case1: if L_smoothed(t) lies between LT and HT
Then Dj_target = r
Case2: if L_smoothed(t) lies below LT or above HT

$$Dj\_target = r + (V/2 - L\_smoothed(t))/T$$

Here, V/2 is the half level of the buffer with size V. T is the buffer level checking period or target downloading rate adjustment period.

Then according to the determined target aggregate downloading rate Dj_target and the optimized transmission rates $D_{ij}$_calculated calculated for each active sender peer based on the streaming situation, a desired downloading rate from each active sender peer or the number of active sender peers can be adjusted. The adjustment involves the new downloading rate determination, new active sender peer selection and some existing connections being discontinued. For example, if the total rate of the calculated transmission rates $D_{ij}$_calculated is lower than the target downloading rate, a new sender peer will be added if it is allowed, or the downloading rate from the active sender peer can be increased. Otherwise, if the total rate is higher than the target, some sender peers can be changed to be standby peer, or the downloading rate can be decreased.

The principle of the active sender peer and its rate adjustment is as follows:

The number of active sender peers is as small as possible since the small number of active peer leads to high buffer utilization;

The aggregate downloading rate of each receiver peer should be equal to the video playback rate r or adjusted according to the buffer occupancy level.

When a sender peer receives the new downloading rate information from the receiver peer, it assigns the data segment according to the desired downloading rate and then sends data to the receiver peer with the new sending rate. And it also announces periodically its available bandwidth to the peers being connected to it.

Fig.5 is a flow chart showing a method for streaming multimedia content according to the embodiment of the invention. In step 501, a target downloading rate of the multimedia content is obtained periodically (the period T) according to the playback rate of the interested multimedia content and the buffer occupancy level as mentioned above. The target downloading rate is the total downloading rate from all active sender peers, and can equal to the playback rate or can be higher or lower than the playback rate according to the buffer occupancy level. Then in step 502, an optimized downloading rate for each sender peer is obtained based on the TFRC equation by the data transmission situation. In step 503, the total of the optimized downloading rate from each sender peer and the target downloading rate are considered to adjust the downloading rate from each sender peer in step 504. In addition, in step 505 the number of the sender peers can also be adjusted to reach the target downloading rate. And in step 506 the multimedia content is streamed from the sender peers to the receiver peer at the determined content downloading rate. In the above steps, since the target downloading rate is obtained periodically in step 501, the following step of obtaining the downloading rate of each sender peer is also implemented periodically with the same period.

Although the specific procedure has been described step by step in the scenario of sender peers and receiver peer of the multimedia communication.network, one skilled in the art knows that some of steps can be combined into one step or divided into further steps to implement the embodiment of the invention, and the sender peer can also be one or more server in the network. These combination and variance are within the scope of the invention.

Although a video content is used as an embodiment to explain the invention, one skilled in the art knows that the method of streaming multimedia content in the embodiment can be used for any internet material that can be played back while need to be downloaded at the same time.

The foregoing merely illustrates the embodiment of the invention and it will thus be appreciated that those skilled in the art will be able to devise numerous alternative arrangements which, although not explicitly described herein, embody the principles of the invention as defined by the present claims.

## Claims

1.    A method for streaming a multimedia content from a set of at least one sender peer, to a receiver peer, comprising, at the level of the receiver peer, the step of:

receiving the multimedia content streamed from each sender peer of the set at a new respective determined downloading, rate for each sender peer of a set, **characterized in that** the method comprises periodically adjusting the respective downloading rate of each sender peer through rate selection in the receiver peer, including:

periodically obtaining (501) a target downloading rate by the receiver peer for downloading the multimedia content, according to the playback rate of the multimedia content and a buffer occupancy level of the receiver peer, wherein the obtained target downloading rate is the playback rate if the buffer occupancy level is within predetermined thresholds (LT, HT), (401, 402), or the playback rate increased or decreased by a relative value to the buffer occupancy level if the buffer occupancy level is beyond the predetermined thresholds;
periodically calculating (502) an optimized transmission rate for each sender peer corresponding to a measured data transmission congestion situation between the receiver peer and each respective sender peer and determining (504) the said new respective downloading rate for each sender peer of the set, based on the aggregate of the calculated transmission rates and the target downloading rate obtained for the receiver (503), and
receiving multimedia content streamed from each sender peer of the set at said new respective downloading rate.

2.    The method according to claim 1, wherein measuring the data transmission congestion situation comprises getting roundtrip time, loss event rate and retransmit timeout values.

3.    The method according to claim 1 or 2, further comprising updating the number of sender peer(s) in the set of the at least one sender peer for streaming the multimedia content after the step of determining (504), wherein updating comprises minimizing a number of sender peers in the set.

4. The method according to claim 3, further comprising adding a new sender peer in the set or dropping a sender peer from the set.

5. The method according to one of claims 1 to 4, wherein the step of determining is implemented periodically after the step of obtaining (501) with the same period as the step of obtaining.

6. The method according to any one of the preceding claims 2 to 5, wherein the respective calculated transmission rate for each sender peer is obtained by Transmission Control Protocol Friendly rate control, TFRC.

7. A receiver peer in a multimedia communication system, operated to receive a multimedia content from a set of at least one sender peer **characterized in that** it comprises rate selector means (208) for periodically adjusting a new respective downloading rate for each sender peer of a set, comprising :

> means for periodically obtaining a target downloading rate of the multimedia content from the set of at least one sender peer, according to a playback rate of the multimedia content and a buffer occupancy level of the receiver peer, wherein the obtained target downloading rate is the playback rate of the multimedia content if the buffer occupancy level is within predetermined thresholds (LT, HT), (401, 402), or the playback rate of the multimedia content increased or decreased by a relative value to the buffer occupancy level if the buffer occupancy level is beyond the predetermined thresholds;
> means for periodically determining a calculated transmission rate for each sender peer, that is optimized according to a measured data transmission congestion situation between the receiver peer and the respective sender peer and the said new respective downloading rate for each sender peer of a set, based on the aggregate of the calculated transmission rates and the target downloading rate obtained for the receiver (503); and
> means for receiving the multimedia content streamed from each sender peer of the set at the new respective determined downloading rate.

**Patentansprüche**

1. Verfahren zum Streamen eines Multimedia-Inhalts von einem Satz von mindestens einem Sender-Peer zu einem Empfänger-Peer, der auf der Ebene des Empfänger-Peers folgenden Schritt umfasst: Empfangen des Multimedia-Inhalts, der von jedem Sender-Peer des Satzes gestreamt wird, bei einer neuen jeweils bestimmten Download-Geschwindigkeit für jeden Sender-Peer eines Satzes,
   **dadurch gekennzeichnet, dass** das Verfahren das periodische Einstellen der jeweiligen Download-Geschwindigkeit jedes Sender-Peers durch die Geschwindigkeitsauswahl in dem Empfänger-Peer umfasst, einschließlich:

> periodisches Gewinnen (501) einer Ziel-Download-Geschwindigkeit durch den Empfänger-Peer zum Herunterladen des Multimedia-Inhalts entsprechend der Wiedergabegeschwindigkeit des Multimedia-Inhalts und eines Pufferbelegungspegels des Empfänger-Peers, wobei die gewonnene Ziel-Download-Geschwindigkeit die Wiedergabegeschwindigkeit ist, wenn der Pufferbelegungspegel innerhalb vorgegebener Schwellenwerte (LT, HT), (401, 402) liegt oder sich die Wiedergabegeschwindigkeit um einen relativen Wert zu dem Pufferbelegungspegel erhöht oder verringert hat, wenn der Pufferbelegungspegel jenseits der vorgegebenen Schwellenwerte liegt,
> periodisches Berechnen (502) einer optimierten Übertragungsgeschwindigkeit für jeden Sender-Peer, die einer gemessenen Datenübertragungs-Überlastungssituation zwischen dem Empfänger-Peer und jedem jeweiligen Sender-Peer entspricht, und Bestimmen (504) der neuen jeweiligen Download-Geschwindigkeit für jeden Sender-Peer des Satzes, beruhend auf der Summe der berechneten Übertragungsgeschwindigkeiten und der für den Empfänger (503) gewonnenen Ziel-Download-Geschwindigkeit,
> Empfangen von Multimedia-Inhalt, der von jedem Sender-Peer des Satzes bei der neuen jeweiligen Download-Geschwindigkeit gestreamt wird.

2. Verfahren nach Anspruch 1, wobei das Messen der Überlastungssituation bei der Datenübertragung das Erfassen von Rundlaufzeit, Verlustereignisrate und Wiederübertragungzeitüberschreitung umfasst.

3. Verfahren nach Anspruch 1 oder 2, ferner umfassend die Aktualisierung der Anzahl des/der Sender-Peers in dem Satz des mindestens einen Sender-Peers zum Streamen des Multimedia-Inhalts nach dem Schritt des Gewinnens (504), wobei das Aktualisieren die Minimierung einer Anzahl von Sender-Peers in dem Satz umfasst.

4. Verfahren nach Anspruch 3, ferner umfassend das Einfügen eines neuen Sender-Peers in den Satz oder das Fallenlassen eines Sender-Peers aus dem Satz.

5. Verfahren nach einem der Ansprüche 1 bis 4, wobei der Schritt des Bestimmens periodisch nach dem Schritt des Gewinnens (501) mit der gleichen Periode wie der Schritt des Gewinnens durchgeführt wird.

6. Verfahren nach einem der vorhergehenden Ansprüche 2 bis 5, wobei die jeweilige berechnete Übertragungsgeschwindigkeit für jeden Sender-Peer durch Transmission Control Protocol Friendly Rate Control, TFRC, gewonnen wird.

7. Ein Empfänger-Peer in einem Multimedia-Kommunikationssystem, der betrieben wird, um einen Multimedia-Inhalt von einem Satz von mindestens einem Sender-Peer zu empfangen, **dadurch gekennzeichnet, dass** er eine Geschwindigkeitswahleinrichtung (208) zum periodischen Einstellen einer neuen jeweiligen Download-Geschwindigkeit für jeden Sender-Peer eines Satzes umfasst, umfassend:

Mittel zum periodischen Gewinnen einer Ziel-Download-Geschwindigkeit des Multimedia-Inhalts aus dem Satz von mindestens einem Sender-Peer gemäß einer Wiedergabegeschwindigkeit des Multimedia-Inhalts und einem Pufferbelegungspegel des Empfänger-Peers, wobei die gewonnene Ziel-Download-Geschwindigkeit die Wiedergabegeschwindigkeit des Multimedia-Inhalts ist, wenn der Pufferbelegungspegel innerhalb vorgegebener Schwellenwerte (LT, HT) (401, 402) liegt, oder die Wiedergabegeschwindigkeit des Multimedia-Inhalts um einen relativen Wert zu dem Pufferbelegungspegel erhöht oder verringert wird, wenn der Pufferbelegungspegel jenseits der vorgegebenen Schwellenwerte liegt,

Mittel zur periodischen Bestimmung einer berechneten Übertragungsgeschwindigkeit für jeden Sender-Peer, die entsprechend einer gemessenen Datenübertragungs-Überlastungssituation zwischen dem Empfänger-Peer und dem Sender-Peer und der neuen jeweiligen Download-Geschwindigkeit für jeden Sender-Peer eines Satzes optimiert wird, beruhend auf der Summe der berechneten Übertragungsgeschwindigkeiten und der für den Empfänger (503) gewonnenen Ziel-Download-Geschwindigkeit, und

Mittel zum Empfangen des Multimedia-Inhalts, der von jedem Sender-Peer des Satzes bei der neuen jeweiligen bestimmten Download-Geschwindigkeit gestreamt wird.

## Revendications

1. Procédé pour transmettre en continu un contenu multimédia depuis un ensemble d'au moins un homologue émetteur vers un homologue récepteur, comprenant, au niveau de l'homologue récepteur, l'étape suivante :

réception du contenu multimédia transmis en continu depuis chaque homologue émetteur de l'ensemble à un nouveau débit de téléchargement déterminé respectif pour chaque homologue émetteur d'un ensemble, **caractérisé en ce que** le procédé comprend un ajustement périodique du débit de téléchargement respectif de chaque homologue émetteur via la sélection de débit dans l'homologue récepteur, comprenant :

l'obtention périodique (501) d'un débit de téléchargement cible par l'homologue récepteur pour le téléchargement du contenu multimédia, en fonction du débit de lecture du contenu multimédia et du niveau de remplissage d'un tampon de l'homologue récepteur, dans laquelle le débit de téléchargement cible obtenu est le débit de lecture si le niveau de remplissage du tampon se trouve dans les seuils prédéterminés (LT, HT), (401/402), ou le débit de lecture augmenté ou diminué d'une valeur relative par rapport au niveau de remplissage du tampon si le niveau de remplissage du tampon dépasse les seuils prédéterminés ;

le calcul périodique (502) d'un débit de transmission optimisé pour chaque homologue émetteur correspondant à une situation de congestion de transmission de données évaluée entre l'homologue récepteur et chaque homologue émetteur respectif et la détermination (504) dudit nouveau débit de téléchargement respectif pour chaque homologue émetteur de l'ensemble, d'après le total des débits de transmission calculés et le débit de téléchargement cible obtenu pour le récepteur (503), et

réception du contenu multimédia transmis en continu depuis chaque homologue émetteur de l'ensemble audit nouveau débit de téléchargement respectif.

2. Procédé selon la revendication 1, dans lequel l'évaluation de la situation de congestion de transmission de données comprend le temps de transmission aller-retour, le taux d'événements de perte et des valeurs d'expiration de retransmission.

3. Procédé selon la revendication 1 ou 2, comprenant en outre la mise à jour du nombre d'homologues émetteurs dans l'ensemble du au moins un homologue émetteur pour la transmission en continu du contenu multimédia après l'étape de détermination (504), dans lequel la mise à jour comprend la limitation d'un nombre d'homologues émetteurs dans l'ensemble.

4. Procédé selon la revendication 3, comprenant en outre l'ajout d'un nouvel homologue émetteur à l'ensemble ou le retrait d'un homologue émetteur de l'ensemble.

5. Procédé selon l'une des revendications 1 à 4, dans lequel l'étape de détermination est mise en oeuvre périodiquement après l'étape d'obtention (501) sur la même période que l'étape d'obtention.

6. Procédé selon l'une des revendications 2 à 5 précédentes, dans lequel le débit de transmission calculé respectif pour chaque homologue émetteur est obtenu par TFRC (Transmission Control Protocol Friendly Rate Control).

7. Homologue récepteur dans un système de communication multimédia, exploité pour recevoir un contenu multimédia d'un ensemble d'au moins un homologue émetteur **caractérisé en ce qu'**il comprend un moyen sélecteur de débit (208) pour l'ajustement périodique d'un nouveau débit de téléchargement respectif pour chaque homologue émetteur d'un ensemble, comprenant :

un moyen pour obtenir périodiquement un débit de téléchargement cible du contenu multimédia à partir de l'ensemble d'au moins un homologue émetteur, en fonction d'un débit de lecture du contenu multimédia et du niveau de remplissage d'un tampon de l'homologue récepteur, dans lequel le débit de téléchargement cible obtenu est le débit de lecture du contenu multimédia si le niveau de remplissage du tampon se trouve dans les seuils prédéterminés (LT, HT), (401, 402) ou le débit de lecture du contenu multimédia augmenté ou diminué d'une valeur relative par rapport au niveau de remplissage du tampon si le niveau de remplissage du tampon dépasse les seuils prédéterminés ;
un moyen pour déterminer périodiquement un débit de transmission calculé pour chaque homologue émetteur, optimisé en fonction d'une situation de congestion de transmission de données évaluée entre l'homologue récepteur et l'homologue émetteur respectif et ledit nouveau débit de téléchargement respectif pour chaque homologue émetteur d'un ensemble, d'après le total des débits de transmission calculés et du débit de téléchargement cible obtenu pour le récepteur (503) ; et
un moyen pour recevoir le contenu multimédia transmis en continu depuis chaque homologue émetteur de l'ensemble au nouveau débit de téléchargement déterminé respectif.

Multimedia Communication System 100

Data and message
Message only

Fig.1

**Fig. 2**

EP 2 715 987 B1

```
┌──────────────────────┐
│  Receiver Peer (A)    )
└──────────┬───────────┘
           │
┌──────────┴────────────────────────┐
│ Get a set of candidate sender peers│
└──────────┬────────────────────────┘
           │
┌──────────┴──────────────────────┐      ┌──────────────────────────────────┐
│ Set up connection with sender peers│     │  Sender Peer (B,C,D,E,F,G)        )
└──────────┬──────────────────────┘      └────────────────┬─────────────────┘
           │                                              │
           │◄── Msg (available uploading rate) ───────────┤
           │                                              │
           │
┌──────────┴────────────────────┐             ┌──────────────────────────────┐
│  Active sender peer selection  │             │  Active Sender Peer (B,C,D)    )
└──────────┬────────────────────┘             └──────────────┬───────────────┘
           │                                                 │
           ├── Msg (desired rate of all active sender peers)─►│
           │                                    ┌────────────┴───────────────┐
           │                                    │  6 Data assignment          │
           │                                    └────────────┬───────────────┘
           │◄── Msg (available uploading rate) ──────────────┤
           │                                                 │
           │◄══ Data ════════════════════════════════════════┤
           │
┌──────────┴──────────────────────────────┐
│  Measurement (RTT, loss event rate)      │
│  Calculate the new sending rate          │
│  Adjustment if needed                    │
└──────────┬──────────────────────────────┘
           │
  Loop     ├── Msg (new desired rate of all active sender peers)─►│
           │                                    ┌────────────────┴─────────────┐
           │                                    │  Data assignment              │
           │                                    └────────────────┬─────────────┘
           │◄── Msg (available uploading rate )──────────────────┤
           │
```

**Procedure of Congestion Control Mechanism**

**Fig.3**

|  |  |  |
|--|--|--|
|  |  |  |

0    LT (401)      HT   B
                      (402)

**Receiver buffer level**

**Fig.4**

```
┌─────────────────────────────────┐
│  Obtaining a target downloading  │   501
│  rate of the multimedia stream   │
└─────────────────────────────────┘
                 │
                 ▼
┌─────────────────────────────────────┐
│  Obtaining an optimized stream       │   502
│  downloading rate for each sender peer│
└─────────────────────────────────────┘
                 │
                 ▼
┌─────────────────────────────────┐
│  Comparing the optimized stream  │
│  downloading rate and the target │   503
│        downloading rate          │
└─────────────────────────────────┘
                 │
                 ▼
┌─────────────────────────────────┐
│  Determining a stream downloading│   504
│  rate for each sender peer       │
└─────────────────────────────────┘
                 │
                 ▼
┌─────────────────────────────────┐
│  Updating the number of the      │   505
│        sender peers              │
└─────────────────────────────────┘
                 │
                 ▼
┌─────────────────────────────────┐
│  Receiving the multimedia stream │   506
│  from the sender peers           │
└─────────────────────────────────┘
```

**Fig.5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080037527 A

**Non-patent literature cited in the description**

• Rate-distorsion Optimized Client Side Rate Control for Adaptative Media Streaming. **MEHROTRA et al.** MMSP. IEEE, 05 October 2009, vol. 09